# EUROPEAN PATENT APPLICATION

(11) **EP 4 671 547 A1**
(43) Date of publication of application: **31.12.2025**
(21) Application number: 25184540.0
(22) Date of filing: 23.06.2025
(51) Int. Cl.: F16B 5/00, E04B 1/343, E04B 1/61

(54) **APPARATUS FOR CONNECTING SHED PANELS**

(30) Priority: 26.06.2024 US 202463664433 P; 15.05.2025 US 202563806477 P; 09.06.2025 US 202519232377
(71) Applicant: Lifetime Products, Inc., Clearfield, UT 84016 (US)
(72) Inventor: Watson, Neil Ben, Clearfield, 84016 (US); Taylor, Kenneth William, Clearfield, 84016 (US); Wendt, Jerremy Ross, Clearfield, 84016 (US); Jones, Nathan Craig, Clearfield, 84016 (US); Branch, Paul Craig, Clearfield, 84016 (US)
(74) Representative: Schwarz & Partner Patentanwälte GmbH

(57) **Abstract**

In one example, an apparatus, which may take the form of a portion of a shed, includes a first structure such as a first panel, a second structure such as a second panel, and a connector configured to releasably connect the first structure and the second structure together. The connector includes a body, an arm that is integral with the body and configured to be removably received in a receptacle cooperatively defined by the first structure and the second structure. The connector further includes a web connecting the arm to the body.

## Description

### TECHNOLOGICAL FIELD OF THE DISCLOSURE

One or more example embodiments are directed to structures such as panels, and associated connectors. One particular embodiment comprises a connector configured to releasably connect two panels together. A connector according to various embodiments may be used alone, or in conjunction with one or more other connectors and/or connection mechanisms.

### BACKGROUND

Structures, such as sheds for example, may be manufactured and shipped in unassembled form. These structures may comprise multiple parts that must be assembled together before the structure can be used. Even after it has been assembled however, a structure may need to be disassembled one or more times, such as when the structure is to be moved to a different location for example.

Assembly and disassembly of conventional structures can be hampered by the fact that such structures often require numerous fasteners and, as such, may take a significant amount of time to assemble, and disassemble if the need should arise. Correspondingly, tools of various types may be required in order to attach, and detach, the fasteners. In some cases, conventional structures are not meant to be disassembled at all, which can prove problematic if there is a need to relocate the structure for some reason.

### BRIEF DESCRIPTION OF THE DRAWINGS

In order to describe the manner in which at least some of the advantages and features of one or more embodiments may be obtained, a more particular description of embodiments will be rendered by reference to specific embodiments thereof which are illustrated in the appended drawings. Understanding that these drawings depict only typical embodiments and are not therefore to be considered to be limiting of the scope of this disclosure, embodiments will be described and explained with additional specificity and detail through the use of the accompanying drawings.

### NOTES REGARDING THE FIGURES:

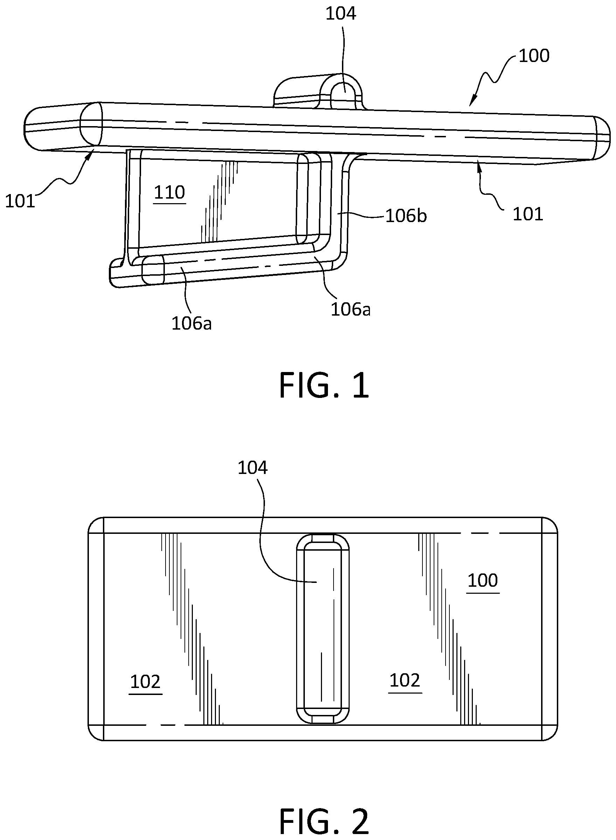

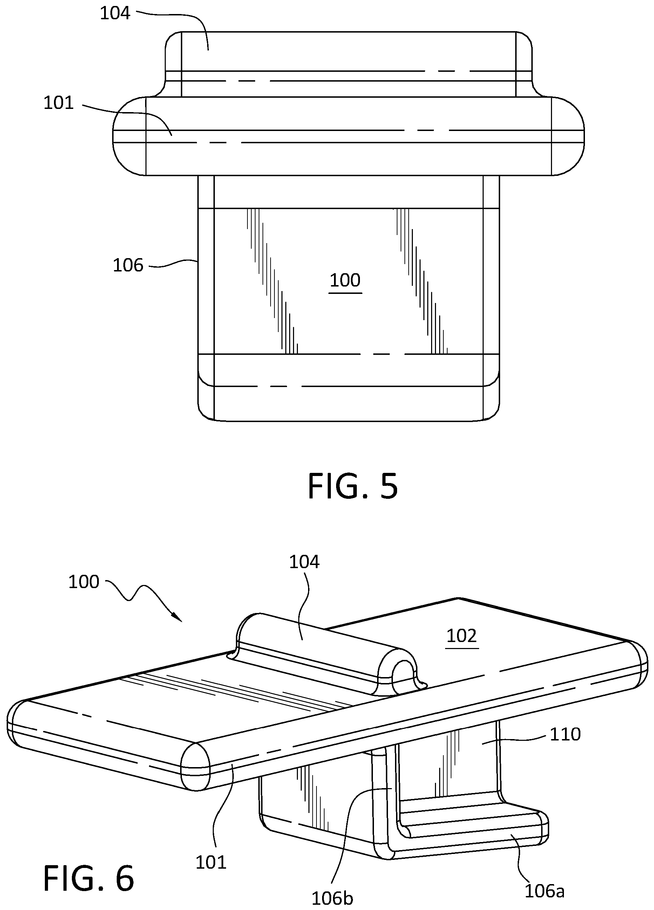

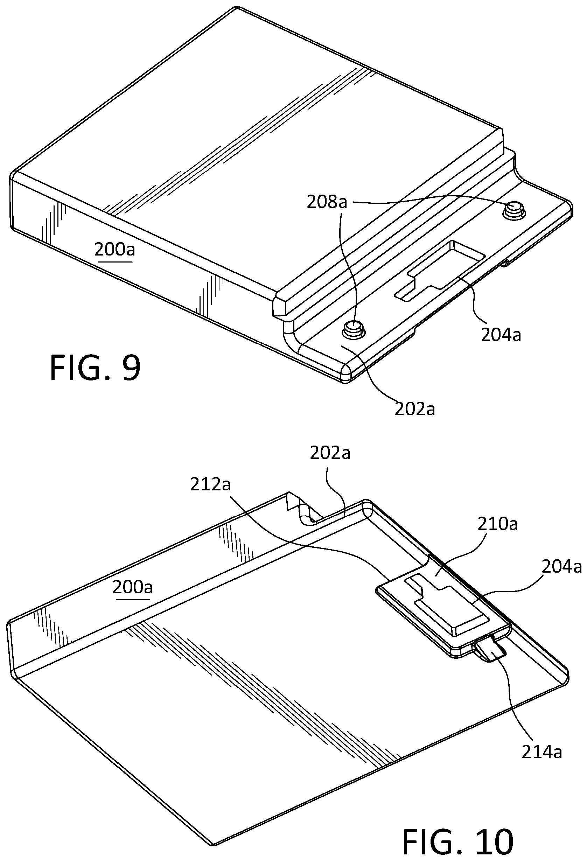

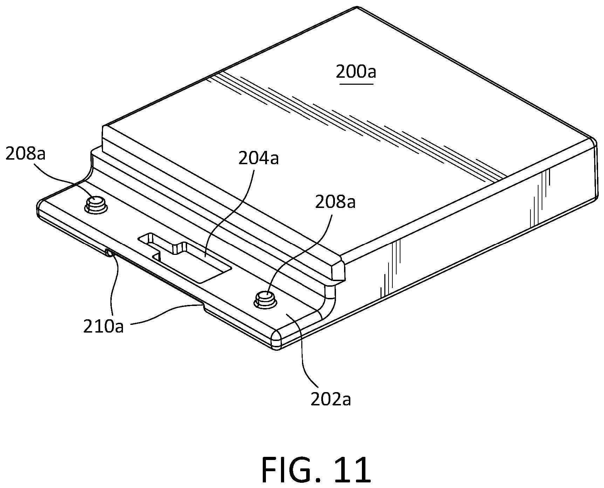

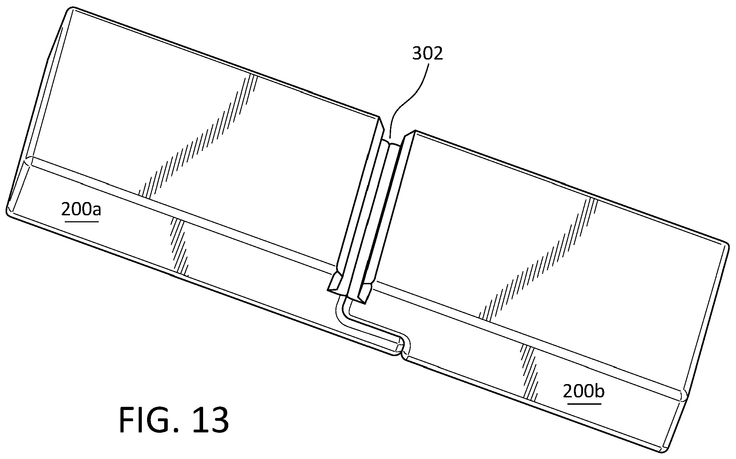

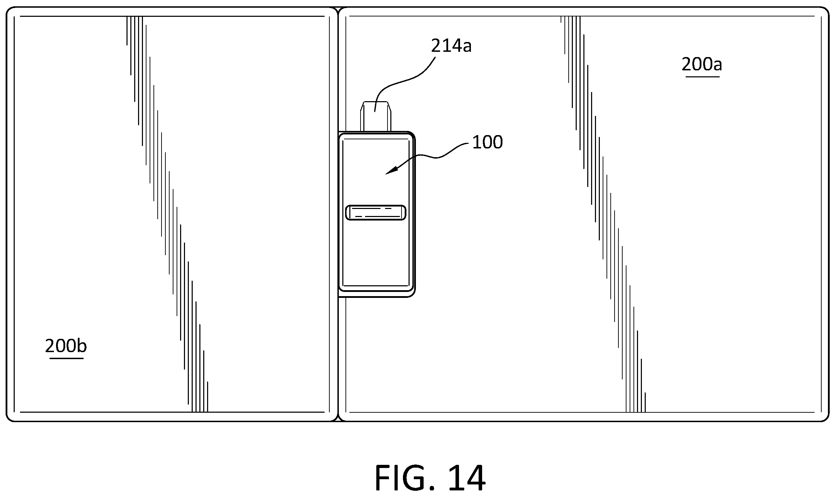

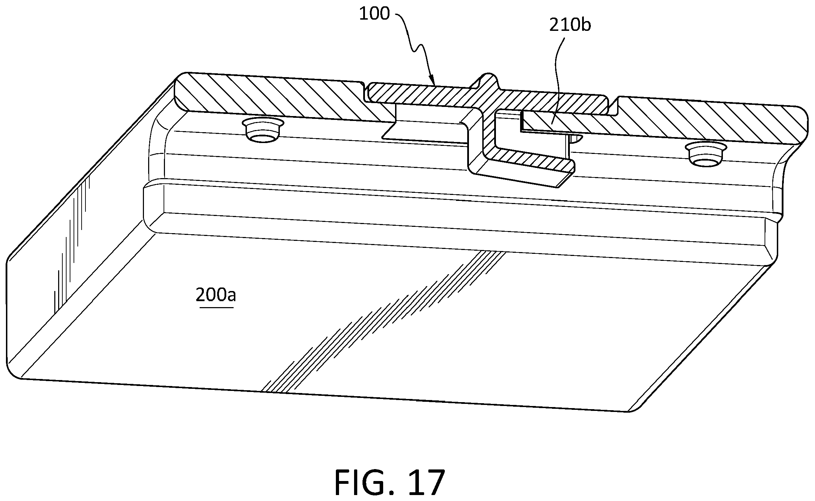

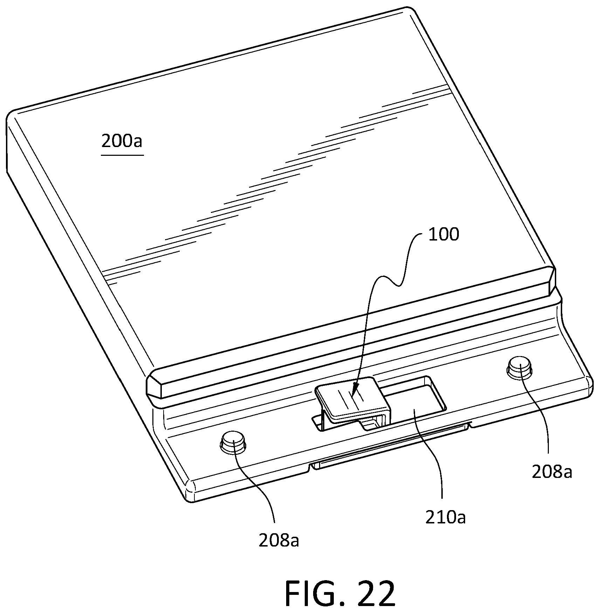

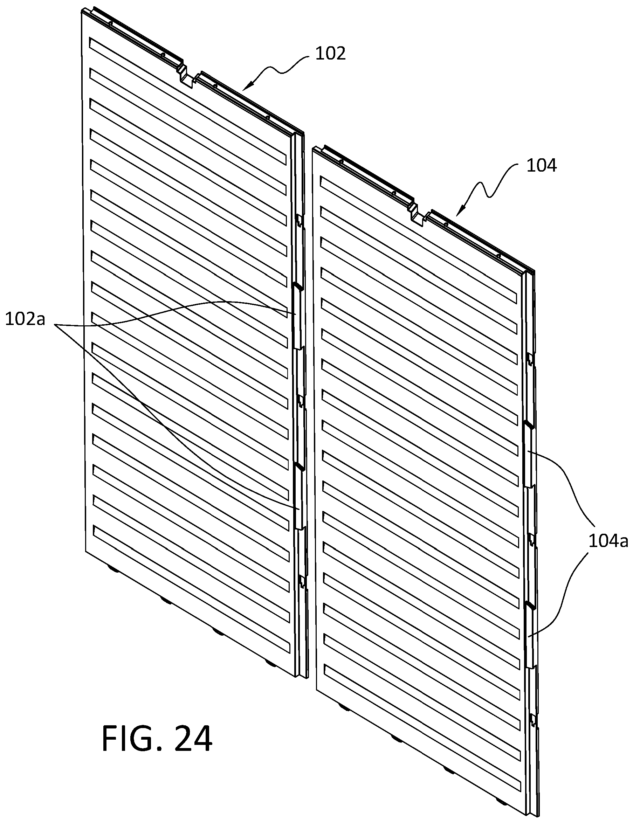

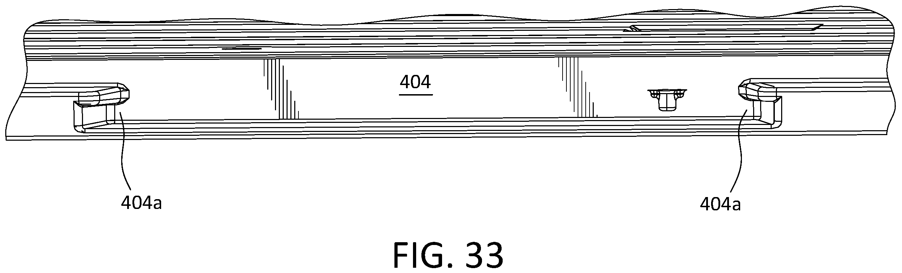

[1] Figures 24-40 of the present application correspond to Figures 1-17 of the following priority application and are discussed in detail in that priority application: United States Provisional Patent Application, Ser. 63/806,477, entitled WALL PANEL WITH DOVETAIL CONNECTION, filed May 15, 2025 (the '477 Application), which is incorporated herein in its entirety by this reference.
[2] In Figures 24-40 of the present application, the reference numerals (set forth below in the 'List of Reference Numerals') refer to elements of the '477 Application, and not to elements of Figures 1-23 of the present application. Likewise, reference numerals (also set forth below in the 'List of Reference Numerals') in Figures 1-23 of the present application refer only to elements of this application and not to elements of the '477 Application and Figures 24-40 of the present application, respectively.
   Figure 1 is a side perspective view of a connector, according to one embodiment.
   Figure 2 is a top view of a connector, according to one embodiment.
   Figure 3 is a first end view of a first end of a connector, according to one embodiment.
   Figure 4 is a side perspective view of a connector, according to one embodiment.
   Figure 5 is a second end view of a second end of a connector, according to one embodiment.
   Figure 6 is a top perspective view of a connector, according to one embodiment.
   Figure 7 is a top perspective view of a first structure, configured to be joined to a second structure with a connector, according to one embodiment.
   Figure 8 is a bottom perspective view of a first structure, configured to be joined to a second structure, with a connector, according to one embodiment.
   Figure 9 is a top left side perspective view of a second structure, configured to be joined to a first structure, with a connector, according to one embodiment.
   Figure 10 is a bottom perspective view of a second structure, configured to be joined to a first structure, with a connector, according to one embodiment.
   Figure 11 is a top right side perspective view of a second structure, configured to be joined to a first structure, with a connector, according to one embodiment.
   Figure 12 is a top perspective view of a pair of structures connected together by a connector, according to one embodiment.
   Figure 13 is a bottom perspective view of a pair of structures connected together by a connector, according to one embodiment.
   Figure 14 is a top view of a pair of structures connected together by a connector, according to one embodiment.
   Figure 15 is a side perspective view of a pair of structures connected together by a connector, according to one embodiment.
   Figure 16 is a section view showing the engagement of a connector with first and second structures, according to one embodiment.
   Figure 16a is a partial section detail view showing aspects of a first structure, according to one embodiment.
   Figure 17 is a partial section detail view showing a connector positioned with respect to a second structure, according to one embodiment.
   Figure 18 is a section view showing an interface between an engaged first structure and second structure, according to one embodiment.
   Figure 19 is a top perspective view showing a first structure and second structure configured to be connected by a connector, but with the connector removed, according to an embodiment.
   Figure 20 is a left side perspective view of a second structure showing a positioning of a connector relative to the first structure, according to one embodiment.
   Figure 21 is a front perspective view of a second structure and a received connector, according to one embodiment.
   Figure 22 is a top perspective view of a second structure and a received connector, according to one embodiment.
   Figure 23 is a perspective view of another embodiment of a connector.
   Figure 24 is a perspective view of two panels, according to one example embodiment.
   Figure 25 is a front view of two panels, according to one embodiment.
   Figure 26 is another partial perspective view of a panel comprising a recess, according to one embodiment.
   Figure 27 is a partial perspective view of respective complementary structures of a first panel and a second panel, according to one embodiment.
   Figure 28 is another partial perspective view of respective complementary structures of a first panel and a second panel, according to one embodiment.
   Figure 29 is a detail view of a second complementary structure, in the form of a recess, of a panel connecting mechanism, according to one embodiment.
   Figure 30 is detail view of a first complementary structure, in the form of a projection, configured to engage the second complementary structure of Figure 6, according to one embodiment
   Figure 31 is a detail view of the first complementary structure, in the form of a projection, according to one embodiment.
   Figure 32 is a detail view of a second complementary structure, in the form of a recess, according to one embodiment.
   Figure 33 is a side view of the recess of Figure 31, according to one embodiment.
   Figure 34 is a side view of a projection, according to one embodiment.
   Figure 35 is a detail view showing two panels fully engaged with each other, according to one embodiment.
   Figure 36 is a detail view showing respective recesses, and an associated connector, according to one embodiment.
   Figure 37 is a partial section view showing the recesses of Figure 13 and their arrangement with respect to each other, according to an embodiment.
   Figure 38 discloses aspects of a device, and initial stages of an associated process, for creating a feature of a panel or other structure, according to one embodiment.
   Figure 39 discloses aspects of device, and its use during a blow molding process, for creating a feature of a panel or other structure, according to one embodiment.
   Figure 40 discloses aspects of one example feature created by a device and process, according to one embodiment.

### DETAILED DESCRIPTION OF SOME EXAMPLE EMBODIMENTS

Various disclosed embodiments generally relate to structures, which may be made of plastic, that are configured to be releasably joined together with one or more connectors, which may likewise be made of plastic. While reference is made herein to shed panels, such example is only for the purposes of illustrating various aspects of one or more example embodiments, and is not intended to limit the scope of this disclosure, or the claims, in any way.

In one example embodiment, a structure comprises two panels configured to be releasably joined together by a connector configured to be removably received in a receptacle cooperatively defined by the panels. In one embodiment, a connector comprises a first complementary structure configured to releasably engage a second complementary structure cooperatively defined by the structures to be releasably joined. When the connector is fully received in the receptacle, an upper surface of the connector may be flush with the adjacent upper surfaces of the connected structures.

The connected structures may include additional, respective, complementary structures, examples of which may comprise a dovetail, or other, configuration, configured to be releasably engaged with each other. In this way, the structures can be connected together before the connector is inserted into the receptacle.

A receptacle according to one embodiment may be configured to include a lip and/or or other elements, which may be integrally formed with one of the structures to be connected so that when the connector is positioned in the receptacle, at least part of the connector resides beneath, and is retained by, the lip. Finally, the receptacle may comprise, or be positioned near, a ramp or other element that may enable a tool, such as a flathead screwdriver for example, to be inserted beneath the connector so that the connector may be pried out of the receptacle, although a tool is not necessarily required in any embodiment.

In one embodiment, structures, such as panels, that may be connected with a connector, may have a unitary single-piece construction that may be created using a blow-molding process, or other process. A connector according to one embodiment may comprise a solid, single piece of material, such as plastic. A connector may be created using injection molding, compression molding, or another process.

Embodiments, such as the examples disclosed herein, may be beneficial in a variety of respects. For example, and as will be apparent from the present disclosure, one or more embodiments may provide one or more advantageous and unexpected effects, in any combination, some examples of which are set forth below. It should be noted that such effects are neither intended, nor should be construed, to limit the scope of the claims in any way. It should further be noted that nothing herein should be construed as constituting an essential or indispensable element of any embodiment. Rather, various aspects of the disclosed embodiments may be combined in a variety of ways so as to define yet further embodiments. For example, any element(s) of any embodiment may be combined with any element(s) of any other embodiment, to define still further embodiments. Such further embodiments are considered as being within the scope of this disclosure. As well, none of the embodiments embraced within the scope of this disclosure should be construed as resolving, or being limited to the resolution of, any particular problem(s). Nor should any such embodiments be construed to implement, or be limited to implementation of, any particular technical effect(s) or solution(s). Finally, it is not required that any embodiment implement any of the advantageous and unexpected effects disclosed herein.

Example embodiments may provide various advantages relative to conventional structures and devices. For example, an embodiment may enable two structures, such as panels for example, to be quickly and releasably connected together, and taken apart, without requiring the use of any tools. Embodiments may comprise materials that do not rust or degrade when used outside. Various other advantages of one or more embodiments will be apparent from this disclosure.

### DETAILED DESCRIPTION OF EXAMPLE EMBODIMENTS

One or more disclosed embodiments generally relate to various structures, and elements for connecting, such as in a releasable manner for example, those structures. In one example embodiment, such structures may comprise panels of a shed, such as may be used outdoors for tool storage and/or other purposes. More generally, some example embodiments extend to any structures that may be releasably connected together using a connector, which may be reusable, such as the examples disclosed herein. An embodiment may comprise structures that may be releasably connected together with, or without, a connector.

### A. General Aspects of Some Example Structures

Example structures and elements within the scope of this disclosure may be made of any suitable material, including plastics such as high-density polyethylene (HDPE). Depending upon the embodiment, a structure, such as a panel for example, may be formed by any of blow-molding, compression molding, roto-molding, injection molding, thermoforming, vacuum molding, twin sheet molding, drape molding, or any group of one or more of these. The molded structures may be hollow, or at least include one or more hollow portions. Such hollow portions may include, and/or be defined in whole or in part by, one or more tack-offs. As well, molded structures within the scope of this disclosure may include one or more compression molded elements that are integral with the molded structure.

In any of the disclosed embodiments, a blow molded structure may be in the form of a unitary, one-piece structure that is substantially hollow and/or includes a substantially hollow portion. Thus, such embodiments may have an interior that is partly, or completely, hollow. Such embodiments may also include, disposed in the interior, one or more depressions, sometimes referred to as "tack-offs." In such embodiments, these tack-offs may be integrally formed as part of a unitary, one-piece structure during the blow-molding process. The depressions may extend from a first interior surface of the blow molded structure towards a second interior surface of the blow molded structure. The ends of one or more depressions may contact or engage the second surface, or the ends of one or more of the depressions may be spaced apart from the second surface by a distance. In some instances, one or more depressions on a first interior surface may be substantially aligned with corresponding depressions on a second interior surface, and one or more depressions on the first interior surface may contact one or more corresponding depressions on the second interior surface or, alternatively, one or more depressions on the first interior surface may be spaced apart from corresponding depressions on the second interior surface. In still other instances, depressions that contact each other and depressions that are spaced apart from each other may both be present in a blow molded structure. The depressions may be sized and configured to strengthen and/or reinforce the blow molded structure.

As well, example embodiments may include one or more parting lines which may comprise vestigial portions of plastic present on a molded part after molding has been completed. In general, the vestigial portions of plastic comprise plastic that has escaped into a joint between portions of a mold. Additionally, or alternatively, a finished molded part may include visible indicia, such as parting lines for example, where vestigial portions of plastic have been removed from a molded part, such as by grinding for example.

The vestigial portions of plastic, and the corresponding parting lines, may be formed, and/or located at, a junction of the halves of a mold, or mold portion, that is used to make the molded part. That is, the vestigial portions of plastic may be formed when two portions of a mold come together during a molding process.

Example embodiments may include elements such as parting lines. In some particular embodiments, a parting line may extend along part, or all, of a length of a molded element such as a panel. Embodiments may include one or more parting lines formed by compression molding, and/or one or more parting lines formed by blow molding.

One example embodiment of a connector may comprise a single solid piece of material, such as plastic for example. Such an embodiment of a connector may be created using injection molding, compression molding, and/or other manufacturing processes. One example embodiment of a connector may be produced using a blow-molding process.

### B. Aspects of Some Example Embodiments

With reference now to Figures 1-6, details are provided concerning some example embodiments. Such embodiments include, but are not limited to, structures such as panels, and connectors configured to releasably connect such structures.

### B.1 Aspects of an example connector

With reference to the Figures, particularly Figures 1, 2, 3, 4, 5, and 6, one example embodiment comprises a connector 100. The connector 100 may comprise a body 101 that defines an upper surface 102 that is exposed when the connector 100 is engaged with two structures, and a protrusion 104 may extend outward from the upper surface 102. The protrusion 104 may be sized and configured to enable a user to push the connector 100 down into a receptacle, such as may be cooperatively defined by a pair of structures that can be joined together by the connector 100, without the hand of the user sliding along the upper surface 102.

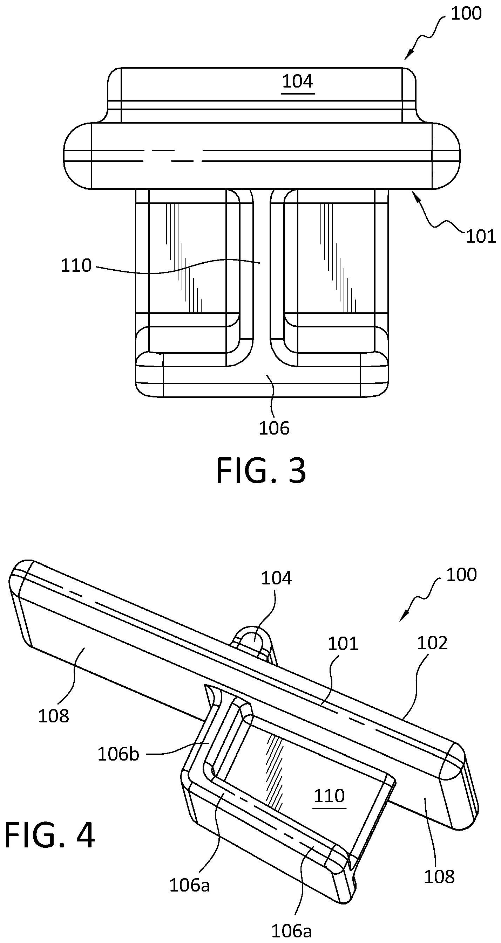

As further indicated in the Figures, an arm 106 extends downward from a lower surface 108 of the connector 100. The arm 106 may have a generally L-shaped configuration. In an embodiment, a lower portion 106a of the arm 106 may be disposed at an angle greater than 90 degrees relative to an upper portion 106b of the arm 106. As a result of this configuration, the distance between the lower portion 106a of the arm 106 and the lower surface 108 may gradually increase as the lateral distance from the upper portion 106b increases, as shown in Figure 4 for example. A web 110 may be provided that connects the arm 106 and the lower surface 108. The web 110 may provide strength and rigidity to the arm 106 to minimize deflection of the arm 106 while the connector 100 is being manipulated, and after the connector 100 is in position and connecting two structures.

Further aspects of the example connector 100 will be apparent from the following discussion of some example structures that may be releasably connected together with the connector 100. Such structures may comprise, for example, panels such as panels that may be included in a structure such as a shed.

### B.2 Aspects of some example structures

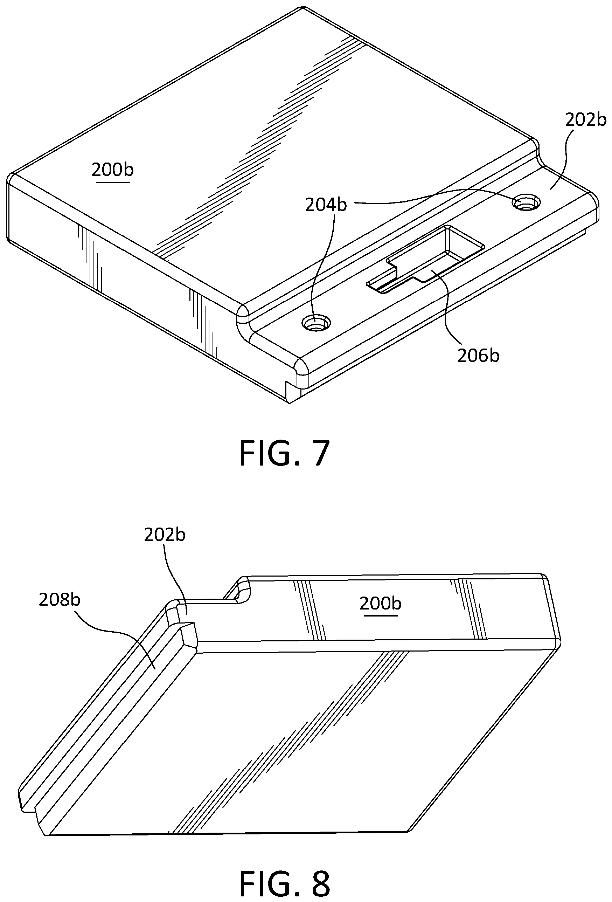

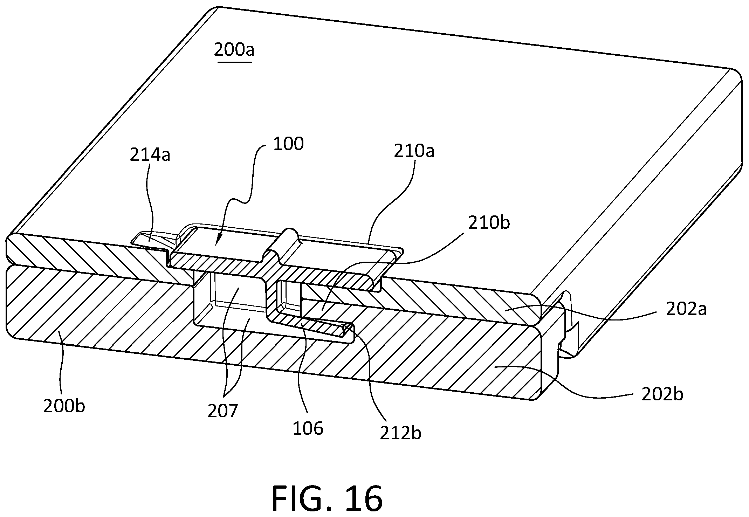

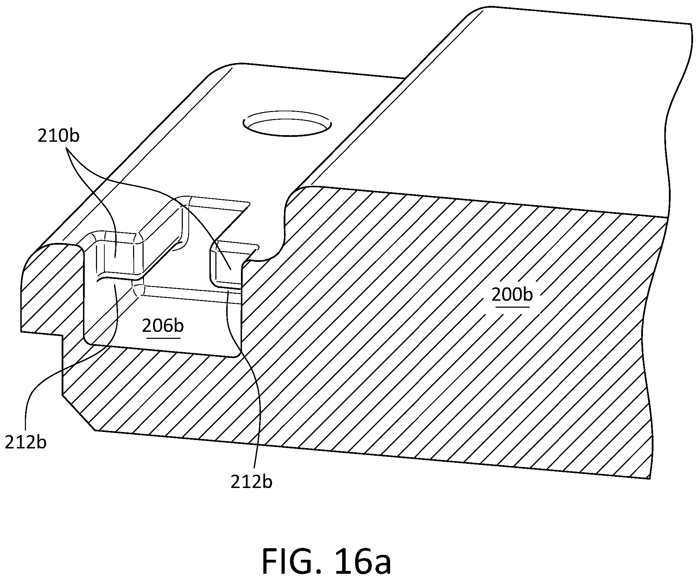

With continued reference to the Figures, including Figures 7-11, details are provided concerning some example structures 200a and 200b such as may be releasably connected together using one, or more, connectors, such as the connector(s) 100 for example. In one embodiment, the structures 200a and 200b may comprise respective panels, such as shed panels for example. As shown, the structure 200b defines a shelf 202b in which recesses 204b, and a recess portion 206b of a receptacle 207 (see Figure 16) cooperatively defined by the structures 200a and 200b, are defined. As well, the structure 200b may define an undercut 208b that may be configured to mate with corresponding structure, discussed below, of the structure 200a. Further, and as discussed below, the recesses 204b, or other complementary structures of the structure 200b, may be configured to engage corresponding complementary structures of the structure 200a.

As shown, the structure 200a may comprise an outwardly extending ledge 202a that defines a recess, or opening, 204a extending through the ledge 202a and having a perimeter that matches, in size and shape, the geometry of the recess 206b disclosed in Figure 8. The ledge 202a may comprise structures, such as posts 208a, that may be integral with the structure 200a and configured and arranged to releasably engage complementary structures, such as the recesses 204b for example, of the structure 200b.

As further indicated in the Figures, the structure 200a may comprise a recessed portion 210a through which the opening 204a extends, and which is sized, configured, and located, to receive a portion of the connector 100. In one embodiment, the depth of the recessed portion 210a may the same as a thickness of the body 101 of the connector 100. In another embodiment, the depth of the recessed portion 210a may be greater, or less than, a thickness of the body 101.

While it may not be apparent from the Figures, a portion, or all of, a perimeter 212a of the recessed portion 210a, may comprise a lip or other structure that extends partway over the recessed portion 210a so as to retain the connector 100. The geometry, location, and extent, of the lip may be such as to prevent the connector 100 from inadvertently coming out of the recessed portion 210a, while still enabling a user to slightly elastically deform the lip and/or the connector 100 in order to remove the connector 100.

With continued reference to the Figures, an embodiment of the structure 200a may comprise a depression 214a, such as a ramp for example, that communicates with the recessed portion 210a. The depression 214a may be sized, configured, and located, to enable a user to use a tool such as a screwdriver for example, to lift the connector 100 out of the receptacle that is collectively formed and defined by the opening 204a, recess 206b, and recessed portion 210a. In one embodiment, a tool may not be required to lift the connector 100 and, for example, a user may use her finger to pry the connector 100 out of the receptacle.

### B.3 Aspects of an example apparatus according to one embodiment

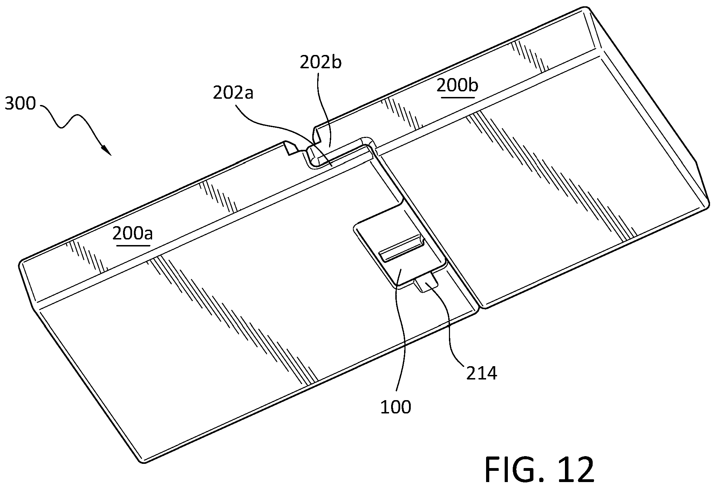

With continued reference to the Figures, particularly Figures 12-22, details are provided concerning an example apparatus 300 comprising the connector 100, structure 200a, and structure 200b. As shown, the structures 200a and 200b may cooperate to define a slot 302 when the structures 200a and 200b are connected together by the connector 100. In one embodiment, the slot 302 may be omitted. As well, it can be seen, in Figure 12 for example, that the shelf 202b and ledge 202a fit together, such as to form a lap joint, when the structures 200a and 200b are connected together by the connector 100.

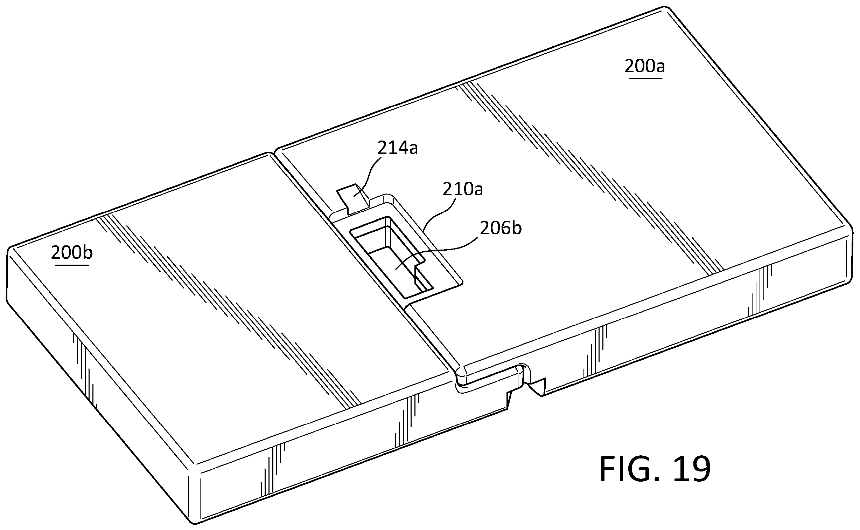

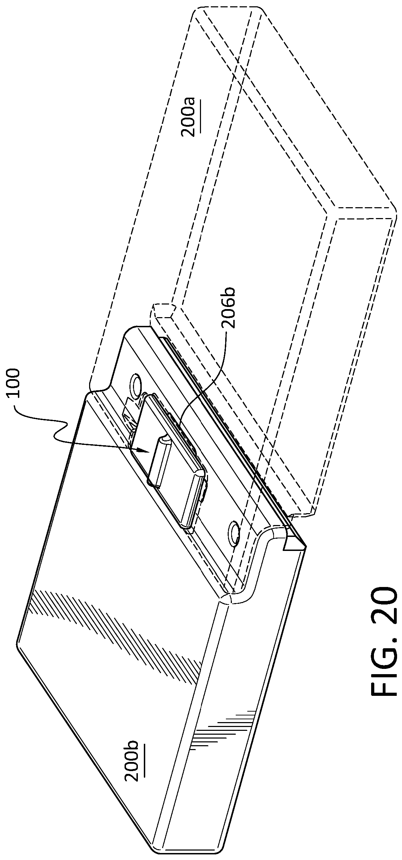

With particular reference to the examples of Figures 16, 16a, 17, and 21, details are provided concerning engagement of the connector 100 with the structures 200a and 200b. As shown in Figures 19 and 20, in particular, protruding elements 210b of the structure 200b extend over a portion of the recess 206b so as to form one or more undercuts 212b beneath which the arm 106 of the connector 100 may be removably positioned so as to engage the structure 200b.

Thus, when the connector 100 is inserted into the receptacle 207, the arm 106, by virtue of its angled configuration in one embodiment, gradually pulls the structures 200a and 200b together into releasable engagement, such as by compression of the structures 200a and 200b together, so that respective surfaces of the shelf 202b and ledge 202a of the structures 200b and 200a, respectively, come into contact each other. As well, the angled configuration of the arm 106 may facilitate gradual insertion of the arm 106 of the connector 100 into the receptacle 207. As noted earlier, the receptacle 207 may include a structure, such as a lip, that acts to retain the connector 100 in the position shown in Figure 16. Removal of the connector 100 may be effected by lifting the end of the connector 100 nearest the depression 214a.

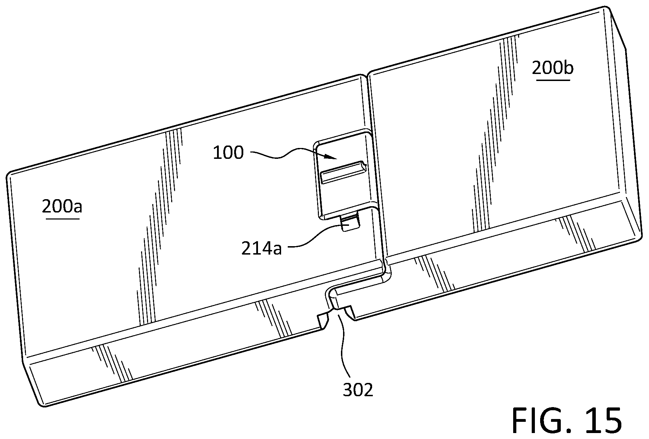

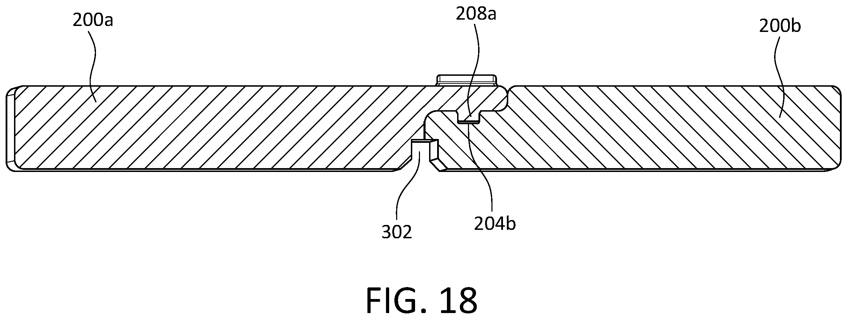

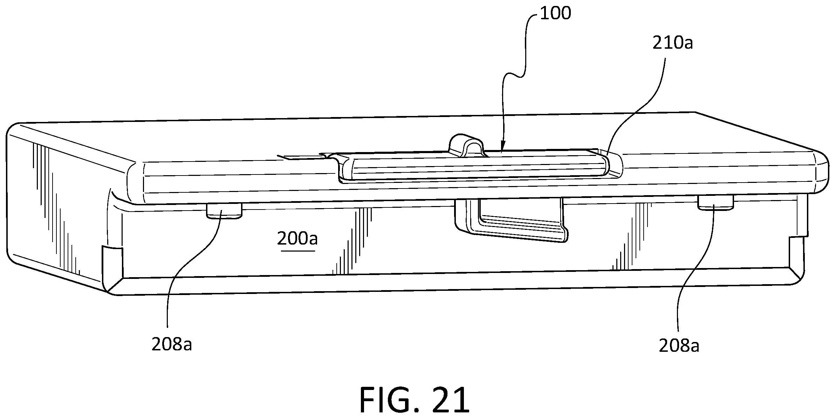

Following is a discussion of various aspects of one or more embodiments. For example, Figure 18 discloses an interlocking of the structure 200a and 200b. As shown, one or more protrusions 208a of the structure 200a may be received in corresponding recesses 204b defined by the structure 200b. Figure 19 discloses another view in which the structures 200a and 200b are connected together, but without the use of the connector 100. Next, Figure 16 discloses the structure 200b with the connector 100 positioned partly in the recess 206b of the receptacle 207. Figure 15 discloses the structures 200a and 200b connected together both by the protrusions 208a/recesses 204b, and the connector 100. Figure 21 discloses a side view of the connector 100 fully received within the recessed portion 210a of the structure 200a.

### C. Aspects of an alternative embodiment

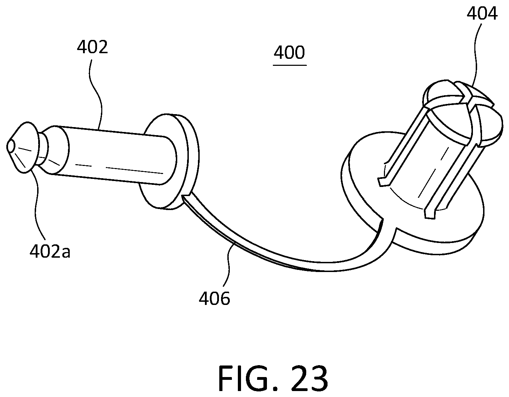

With reference now to Figure 23, an alternative embodiment of a connector 400 is disclosed. In an embodiment, one or more connectors 400 may be used in addition to, or instead of, the connector 100 for connecting two structures together. For example, two structures, such as panels for example, may be connected together using one or more connectors 400 instead of fasteners such as screws. To use the connector 400, a push pin 402 may be inserted into a receiver 404 which may be configured to retain, either permanently or releasably, the push pin 402. For example, a necked portion 402a of the push pin 402 may be engaged by corresponding structure, not shown, of the receiver 404. In one embodiment, one or more push pins 402 may be connected to a first structure, and one or more corresponding receivers 404 connected to a second structure. These structures may be connected together by simply pushing them together so that each of the push pins 402 engages a corresponding receptacle 404. The push pin 204 and receptacle 404 may or may not be tethered together before, and after, the push pin 402 has fully engaged the receptacle 404, by a tether 406.

### D. Further example embodiments - Group 1

Following are some further example embodiments. These are not intended to limit the scope of this disclosure, or of any claims, in any way.

Embodiment 1. An apparatus, comprising: a first structure that defines one or more protrusions along an edge of the first structure; and a second structure that defines one or more recesses along an edge of the second structure, and the first structure and second structure are configured to be removably connected by engagement of the protrusions with respective ones of the recesses.

Embodiment 2. The apparatus as recited in any preceding embodiment, wherein one or both of the first structure and the second structure comprise a respective blow-molded structure with a hollow interior.

Embodiment 3. The apparatus as recited in any preceding embodiment, wherein the protrusions and the recesses together define a dovetail configuration along the edges of the first structure and the second structure when the first structure and the second structure are connected to each other.

Embodiment 4. The apparatus as recited in any preceding embodiment, wherein one or both of the first structure and the second structure comprise a respective panel.

Embodiment 5. The apparatus as recited in any preceding embodiment, wherein the protrusions and the recesses are integral with the respective structures that include them.

Embodiment 6. The apparatus as recited in any preceding embodiment, wherein the first structure comprises one or more recesses along a second edge of the first structure.

Embodiment 7. The apparatus as recited in any preceding embodiment, wherein the second structure comprises one or more protrusions along a second edge of the second structure.

Embodiment 8. The apparatus as recited in any preceding embodiment, wherein the protrusions and the recesses are configured to prevent lifting one of the first and second structures off of the other of the first and second structures when the first and second structures are connected together.

Embodiment 9. The apparatus as recited in any preceding embodiment, wherein the first structure and the second structure form a lap joint when they are connected together.

Embodiment 10. The apparatus as recited in any preceding embodiment, wherein the protrusions comprise respective pockets, and the recesses comprise respective fists.

Embodiment 11. The apparatus as recited in any preceding embodiment, further comprising a connector configured to engage both the first structure and the second structure and to releasably retain the first structure and the second structure together.

Embodiment 12. The apparatus as recited in embodiment 11, wherein a portion of the connector is in tension when the connector retains the first structure and the second structure together.

Embodiment 13. The apparatus as recited in any of embodiments 11-12, wherein the connector compresses the first structure and the second structure together when the connector is engaged with the first structure and the second structure.

Embodiment 14. The apparatus as recited in any of embodiments 11-13, wherein the connector is elastically deformed when the connector retains the first structure and the second structure together.

Embodiment 15. The apparatus as recited in any of embodiments 11-14, wherein the connector comprises a single-piece structure.

Embodiment 16. The apparatus as recited in any of embodiments 11-15, wherein when connected together, the first structure and the second structure are connected edge-to-edge.

Embodiment 17. The apparatus as recited in any of embodiments 11-16, wherein the connector is configured to be at least partly received in, and engage, a receptacle cooperatively defined by the first structure and the second structure when they are connected together.

Embodiment 18. The apparatus as recited in any of embodiments 11-17, wherein the receptacle is defined by respective recesses of the first structure and the second structure.

Embodiment 19. The apparatus as recited in any of embodiments 11-18, wherein the recesses are partly aligned with each other when the first structure and the second structure are connected together.

### E. Further example embodiments - Group 2

Embodiment 1. An apparatus, comprising: a first structure; a second structure; and a connector configured to releasably connect the first structure and the second structure together, and the connector comprises: a body; an arm that is integral with the body and is configured to be removably received in a receptacle cooperatively defined by the first structure and the second structure; and a web connecting the arm to the body.

Embodiment 2. The apparatus as recited in any preceding embodiment, wherein the arm includes a first portion connected to a lower surface of the body, and a second portion disposed at an angle greater than 90 degrees with respect to the first portion.

Embodiment 3. The apparatus as recited in any preceding embodiment, wherein the connector is in a form of a single piece structure.

Embodiment 4. The apparatus as recited in any preceding embodiment, wherein the connector comprises a protrusion extending upward from an upper surface of the body.

Embodiment 5. The apparatus as recited in any preceding embodiment, wherein the arm of the connector extends downward from a lower surface of the body.

Embodiment 6. The apparatus as recited in any preceding embodiment, wherein the connector comprises a single solid piece of plastic.

Embodiment 7. The apparatus as recited in any preceding embodiment, wherein the arm of the connector is configured to releasably engage an undercut of one of the first structure and the second structure when the connector is fully engaged with the receptacle.

Embodiment 8. The apparatus as recited in any preceding embodiment, wherein one or both of the first structure and the second structure comprises a respective blow-molded structure.

Embodiment 9. The apparatus as recited in any preceding embodiment, wherein the connector is configured to reside flush within the receptacle.

Embodiment 10. The apparatus as recited in any preceding embodiment, wherein a majority of an upper surface of the connector is flush with adjacent respective surfaces of the first structure and the second structure when the connector is fully received in the receptacle.

Embodiment 11. The apparatus as recited in embodiment 1, wherein the first structure and the second structure define a protrusion and a recess, respectively, configured and arranged to releasably engage each other.

Embodiment 12. The apparatus as recited in embodiment 11, wherein the protrusion comprises a fist, and the recess comprises a pocket.

Embodiment 13. The apparatus as recited in any of embodiments 11-12, wherein the protrusion and the recess collectively define a dovetail configuration.

Embodiment 14. The apparatus as recited in any of embodiments 11-13, wherein the first structure comprises multiple instances of the protrusion disposed along one or more edges of the first structure.

Embodiment 15. The apparatus as recited in any of embodiments 11-14, wherein the second structure comprises multiple instances of the recess disposed along one or more edges of the second structure.

Embodiment 16. The apparatus as recited in any of embodiments 11-15, wherein the protrusion and the recess have complementary wedge-shaped configurations.

Embodiment 17. The apparatus as recited in any of embodiments 11-16, further comprising a recess in communication with the receptacle and configured to accommodate a tool for removal of the connector.

Embodiment 18. The apparatus as recited in any of embodiments 11-17, wherein the apparatus comprises a portion of a shed.

Embodiment 19. The apparatus as recited in any of embodiments 11-18, wherein the first structure comprises multiple recesses disposed on a first edge of the first structure, and comprises multiple protrusions disposed on an opposite second edge of the first structure.

### F. Further example embodiments - Group 3

Embodiment 1. A method for creating a feature in a molded part, comprising: inflating a parison of melted plastic; closing a mold about the parison, wherein the mold comprises a static feature arranged for contact with the parison when the mold is closed; adjusting a position of a moving core, located in the mold, from an extended position to a retracted position; with the retracted moving core and the static feature, imparting a feature to the plastic; and moving the moving core from the retracted position to the extended position, and removing the molded part from the mold.

Embodiment 2. The method as recited in any preceding embodiment, wherein the moving core is in the extended position while the parison is being created.

Embodiment 3. The method as recited in any preceding embodiment, wherein the moving core begins moving into the retracted position as the mold is closing and the parison begins to contact the moving core.

Embodiment 4. The method as recited in any preceding embodiment, wherein after the mold is closed, the plastic encloses the moving core and the static feature.

Embodiment 5. The method as recited in any preceding embodiment, wherein the moving core moves to the extended position as one or more ejectors extend to eject the molded part from the mold.

Embodiment 6. The method as recited in any preceding embodiment, wherein the moving core moves out of the feature as the mold is opened after creation of the molded part.

Embodiment 7. The method as recited in any preceding embodiment, wherein the feature comprises an element of a dovetail configuration.

Although this disclosure has been described in terms of certain embodiments, other embodiments apparent to those of ordinary skill in the art are also within the scope of this disclosure. Accordingly, the scope of the disclosure is intended to be defined only by the claims which follow.

### DETAILED DISCUSSION OF EMBODIMENTS SHOWN IN FIGURES 24-40

One or more example embodiments in accordance with Figures 24-40 are directed to panels, and associated mechanisms for connecting the panels. One example embodiment comprises a pair of panels configured to be releasably connected to each other with only a single mechanism, or with two different mechanisms.

### ASPECTS OF SOME EXAMPLE EMBODIMENTS

Various disclosed embodiments generally relate to structures, which may be made of plastic, that are configured to be releasably joined together with one or more connectors, which may likewise be made of plastic. While reference is made herein to shed panels, such example is only for the purposes of illustrating various aspects of one or more embodiments, and is not intended to limit the scope of this disclosure, or the claims, in any way.

In one example embodiment, a structure comprises two panels configured to be releasably joined together by one or more different mechanisms. One example of such a mechanism may comprise respective complementary structures, included in first and second panels, that enable the two panels to be releasably connected together. This mechanism may be configured to resist disconnection of the panels when they are subjected to a shear force.

Another example of such a mechanism may comprise other respective complementary structures, included in first and second panels, that cooperate with a connector to keep the two panels in compression with each other so that neither panel can be lifted off of the other panel while the connector is in place. Various example embodiments of such a 'connector' are disclosed in the following priority application: U.S. Provisional Application, Ser. 63/664,433, entitled APPARATUS FOR CONNECTING SHED PANELS, filed on 26Jun24 (the "'433 Application'), which is incorporated herein in its entirety by this reference.

In an embodiment, structures, such as the panels, may have a unitary single piece construction that may be created using a blow-molding process, and/or other process(es). One or more panels may comprise respective elements of a structure, such as a shed, but that is not required.

The embodiments disclosed herein do not constitute an exhaustive summary or enumeration of all possible embodiments. It should be noted that nothing herein should be construed as constituting an essential or indispensable element of any embodiment. Rather, and as the person of ordinary skill in the art will appreciate, various aspects of the disclosed embodiments may be combined in a variety of ways so as to define yet further embodiments. Such further embodiments are considered as being within the scope of this disclosure. As well, none of the embodiments embraced within the scope of this disclosure should be construed as resolving, or being limited to the resolution of, any particular technical problem(s). Nor should such embodiments be construed to implement, or be limited to implementation of, any particular technical effect(s).

Example embodiments may provide various advantages relative to conventional structures and devices. For example, an embodiment may enable two structures, such as panels for example, to be quickly and releasably connected together, and taken apart, without requiring the use of any tools. An embodiment may provide resistance to shear forces that may be exerted on two structures. An embodiment may provide resistance to An embodiment may keep two connected panels in tension with each other so that neither panel can be lifted off of the other panel unless a tension force is overcome. Various other advantages of one or more embodiments will be apparent from this disclosure.

### DETAILED DESCRIPTION OF EXAMPLE EMBODIMENTS

One or more disclosed embodiments generally relate to various structures, and elements for connecting, such as in a releasable manner for example, those structures. In one example embodiment, such structures may comprise panels of a shed, such as may be used outdoors for tool storage and/or other purposes. More generally, example embodiments extend to any structures that may be releasably connected together with, or without, one or more connectors, which may be reusable, such as in the examples disclosed herein.

### A. General Aspects of Some Example Structures

Example structures and elements including, but not limited to, panels, within the scope of this disclosure may be made of any suitable material(s), including plastics such as high-density polyethylene (HDPE). Depending upon the embodiment, a structure, such as a panel for example, may be formed by any of blow-molding, compression molding, roto-molding, injection molding, thermoforming, vacuum molding, twin sheet molding, drape molding, or any group of one or more of these. The molded structures may be hollow, or at least include one or more hollow portions. Such hollow portions may include, and/or be defined in whole or in part by, one or more tack-offs. As well, molded structures within the scope of this disclosure may include one or more compression molded elements that are integral with the molded structure.

In any of the disclosed embodiments, a blow molded structure may be in the form of a unitary, one-piece structure that is substantially hollow and/or includes a substantially hollow portion. Thus, such embodiments may have an interior that is partly, or completely, hollow. Such embodiments may also include, disposed in the interior, one or more depressions, sometimes referred to as "tack-offs." In such embodiments, these tack-offs may be integrally formed as part of a unitary, one-piece structure during the blow-molding process. The depressions may extend from a first interior surface of the blow molded structure towards a second interior surface of the blow molded structure. The ends of one or more depressions may contact or engage the second surface, or the ends of one or more of the depressions may be spaced apart from the second surface by a distance. In some instances, one or more depressions on a first interior surface may be substantially aligned with corresponding depressions on a second interior surface, and one or more depressions on the first interior surface may contact one or more corresponding depressions on the second interior surface or, alternatively, one or more depressions on the first interior surface may be spaced apart from corresponding depressions on the second interior surface. In still other instances, depressions that contact each other and depressions that are spaced apart from each other may both be present in a blow molded structure. The depressions may be sized and configured to strengthen and/or reinforce the blow molded structure.

As well, example embodiments may include one or more parting lines which may comprise vestigial portions of plastic present on a molded part after molding has been completed. In general, the vestigial portions of plastic comprise plastic that has escaped into a joint between portions of a mold. Additionally, or alternatively, a finished molded part may include visible indicia, such as parting lines for example, where vestigial portions of plastic have been removed from a molded part, such as by grinding for example.

The vestigial portions of plastic, and the corresponding parting lines, may be formed, and/or located at, a junction of the halves of a mold, or mold portion, that is used to make the molded part. That is, the vestigial portions of plastic may be formed when two portions of a mold come together during a molding process.

Example embodiments may include elements such as parting lines. In some particular embodiments, a parting line may extend along part, or all, of a length of a molded element such as a panel. Embodiments may include one or more parting lines formed by compression molding, and/or one or more parting lines formed by blow molding.

### B. Aspects of example embodiments of a structure

With reference now to Figures 24-35, details are provided concerning aspects of some example embodiments. Such embodiments include, but are not limited to, structures such as panels, and connectors configured to releasably connect such structures. It is noted that while reference is made herein to a 'dovetail' configuration that may comprise one or more 'fists' and 'pockets' configured to engage each other, such a configuration is provided only by way of illustration and is not intended to limit the scope of this disclosure, or of any claims, in any way. Thus, a fist comprises an example structural implementation of a projection configured to be received in a recess, while a pocket comprises an example structural implementation of a recess configured to receive a projection.

### B.1 Aspects of example structures

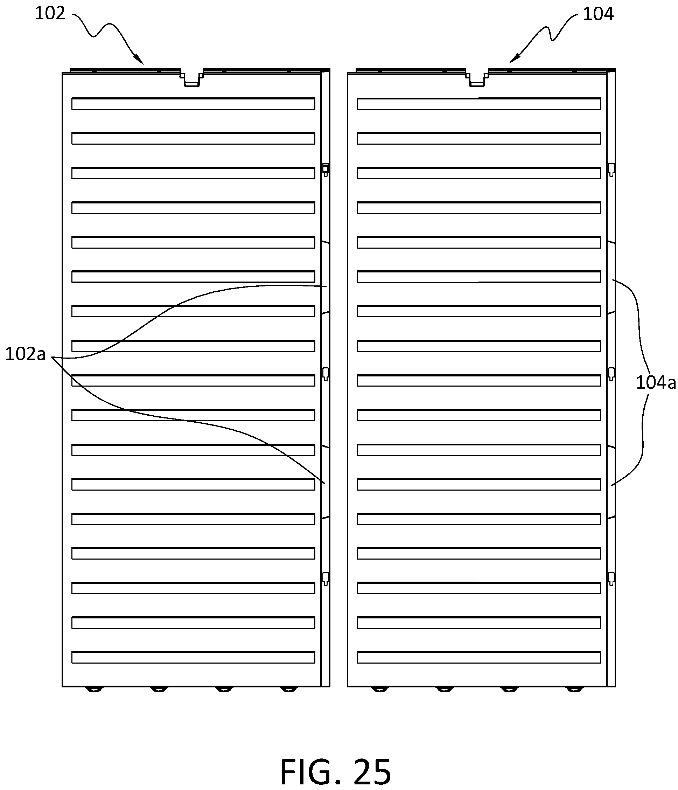

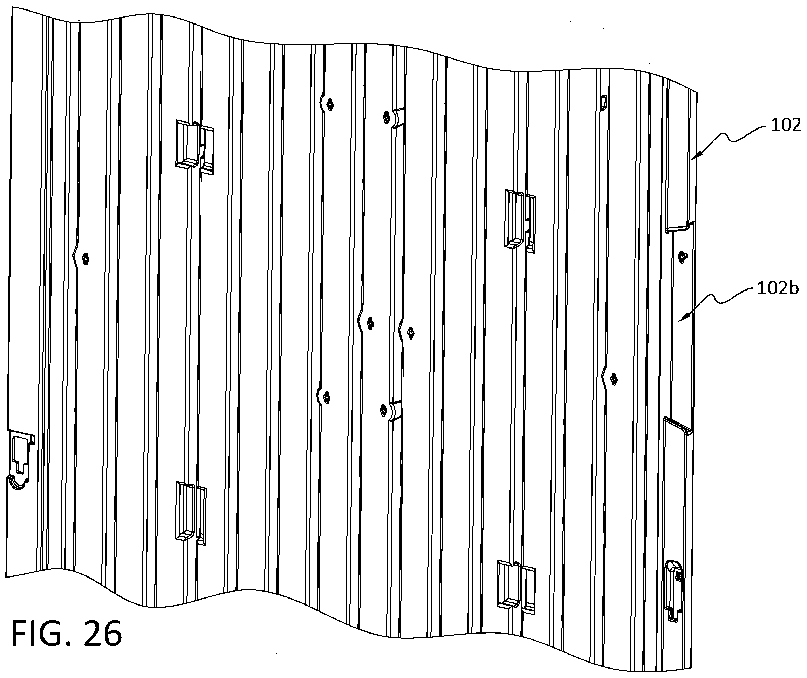

With reference first to the example of Figures 24-26 an embodiment may comprise one or more panels 102 and 104. As shown, the panels 102 and 104 include, along one or more of their respective edges, one or more fists 102a and 104a, configured to engage, for example, a corresponding pocket 102b. As seen by comparing the front side of the panel 102 and the back side of the panel 102, shown in Figures 25 and 26, respectively, the fists 102a may be positioned on one side of the panel 102, and the pockets 102b on the other side of the panel 102. Any number of fists 102a and pockets 102b may be provided in a panel 102. The fists 102a and pockets 102b need not be any particular size, so long as they are configured and arranged to interact with corresponding pockets and fists, respectively, of another panel. The example fists 102a and pockets 102b thus comprise example embodiments of complementary structures that are able to releasably engage each other.

In an embodiment, a fist and a pocket may be integral with an associated panel. In an embodiment, a fist may be formed by compression molding at the same time as the panel is being formed by a blow molding process. The compression molding operation may take place partly, or completely, within the mold used for the blow molding process. Further details concerning some example manufacturing processes are disclosed elsewhere herein.

With continued reference to the Figures, a panel 102 may be configured so that its fists 102a are located along one edge of the panel 102, while the pockets 102b are located on the opposite edge of the panel 102. In the example of Figures 24-25, the fists 102a and pockets 102b are located along respective longitudinal edges of the panel 102, but that is not necessarily required. In an embodiment, fists 102a or pockets 102b may be positioned along only one edge of a panel 102, or may be positioned along more than one edge of a panel 102. As discussed in further detail below, in one embodiment, a fist such as the fist 102a, and a pocket such as the pocket 102b, may together define a dovetail configuration.

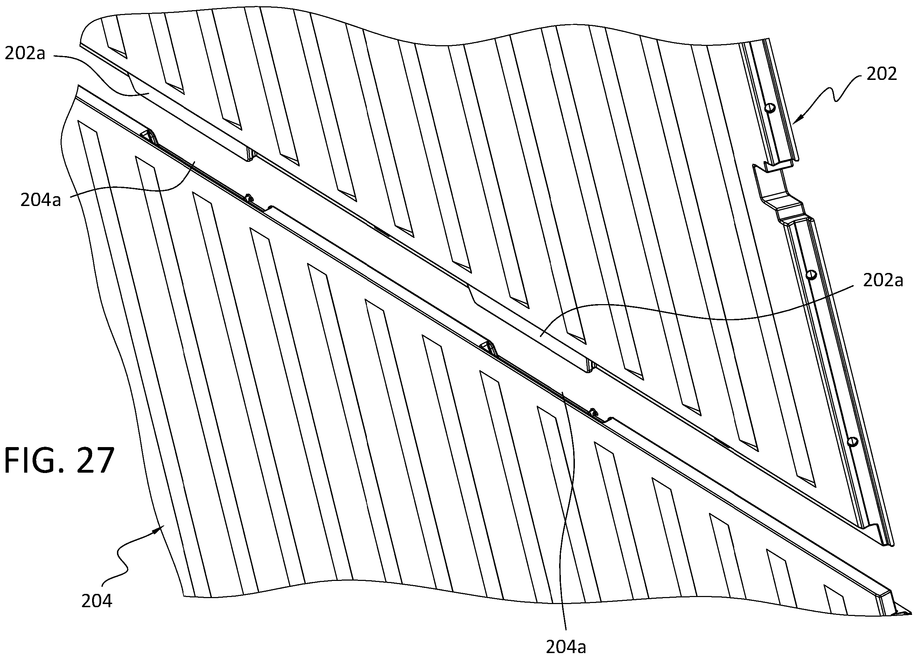

With attention now to the examples of Figures 27-30, further details are provided concerning example panels 202 and 204, which may be similar, or identical, to the panels 102 and 104, respectively. In an embodiment, the panels 202 and 204 may be similar or identical to each other.

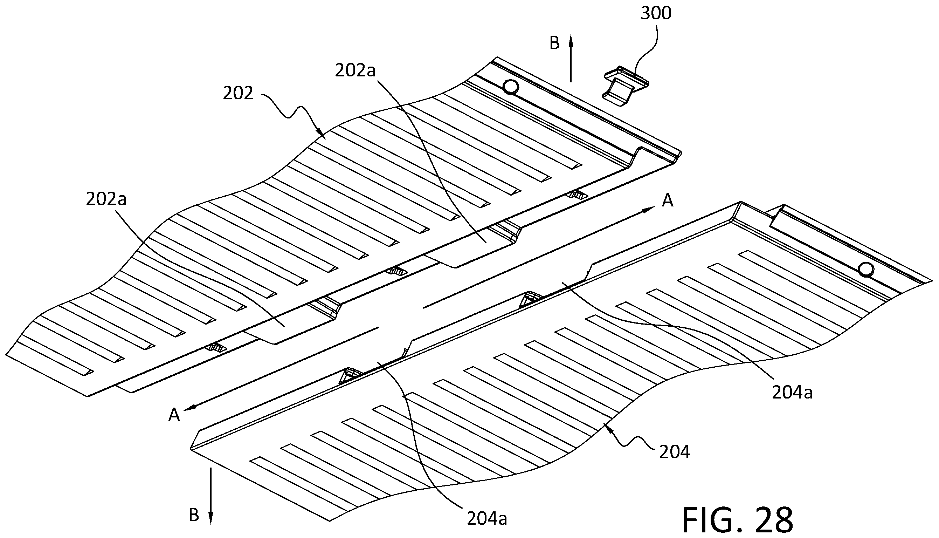

As shown, the panel 202 may include one or more fists 202a along one, or more, edges of the panel 202. Each of the fists 202a may be configured to releasably engage a corresponding pocket 204a of the panel 204. As such, the fists 202a and pockets 204a may have complementary shapes such that those elements, when fit together, substantially prevent lateral motion, indicated by the arrows 'A' in Figure 28, of the panel 202 and the panel 204 relative to each other. In one embodiment, the complementary shapes may comprise a dovetail configuration.

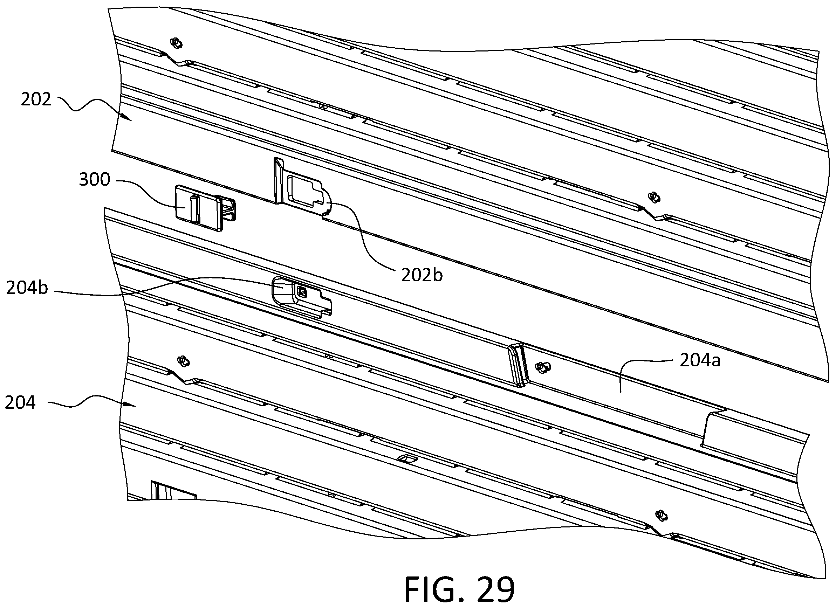

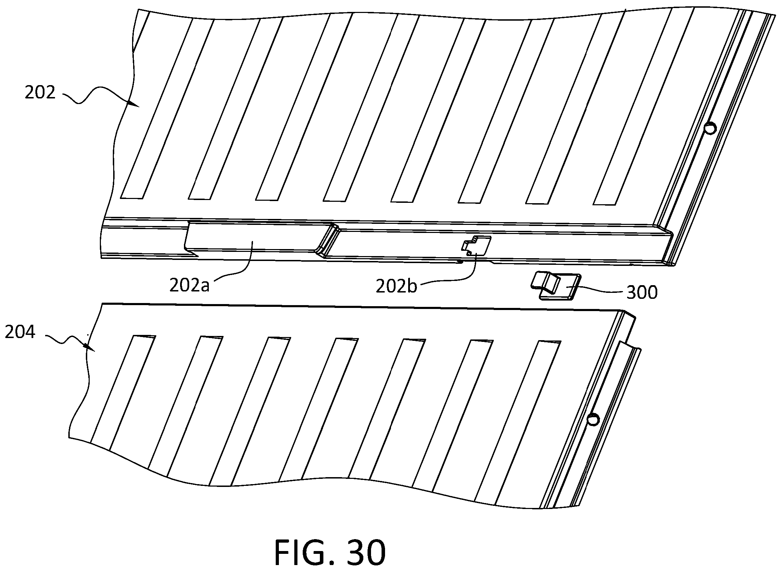

With reference to Figures 29 and 30, and as discussed in more detail below, one or more connectors 300 may be employed to prevent one of the panels 202/204 from being lifted off of the other of the panels 202/204, that is, to prevent, for example, the fists 202a from being lifted out of their respective pockets 204a, such as in the directions indicated by the arrows 'B' in Figure 28. With reference briefly to the example of Figure 29, and as explained in detail in the '433 Application, the connector 300 may engage respective elements 202b and 204b of the panels 202 and 204, respectively, to prevent for example, the fists 202a from being lifted out of the pockets 204a, such as in the directions indicated by the arrows 'C' in Figure 28.

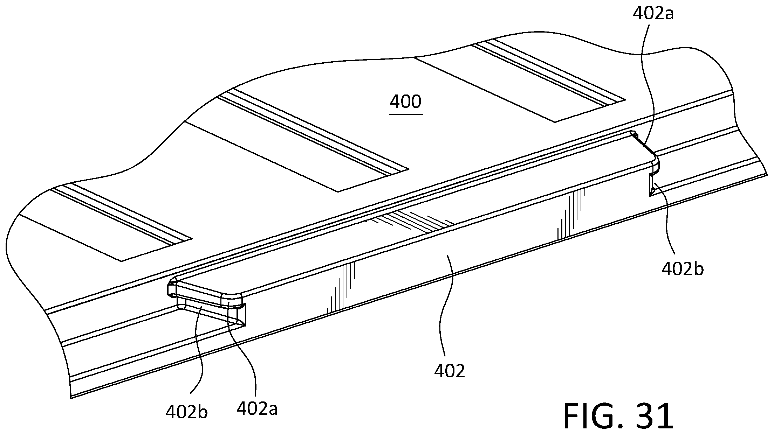

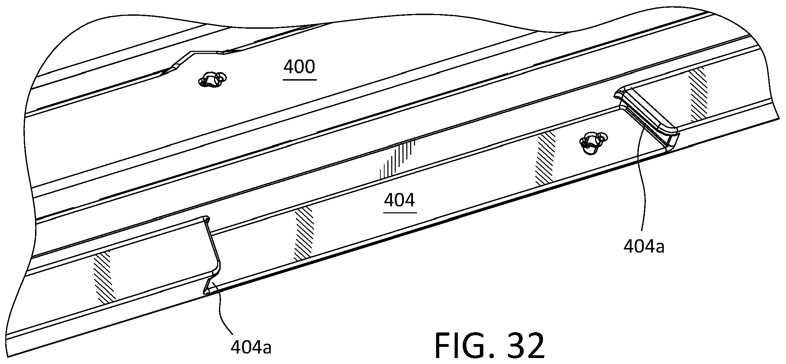

Turning next to Figures 31-34, further details are provided concerning some example fists and pockets, according to one or more embodiments. As shown in the example of Figure 31, a panel 400 may comprise one or more wedge-shaped fists 402 configured to be received in respective corresponding pockets 404, see Figures 32-34, of another panel. As well, Figure 31, and see Figure 30 as well, discloses that the wedge configuration of the fist 402 is such that a narrowest part of the fist 402 is located at the edge of the panel 400, and a widest part of the fist 402 is set back from the edge of the panel 400. Correspondingly, a narrowest part of the pocket 404 is set back from the edge of the panel 400, as shown in Figure 32, while a widest part of the pocket 404 is located at the edge of the panel 400.

In an embodiment, and with continued reference to Figures 31-34, a fist and/or pocket may be configured to prevent one of a pair of connected panels from being lifted out of engagement with the other of the pair of connected panels. For example, the fist 402 of Figure 31 may comprise a flange 402a configuration. The flange 402a configuration may define corresponding undercuts 402b on either side of the fist 402.

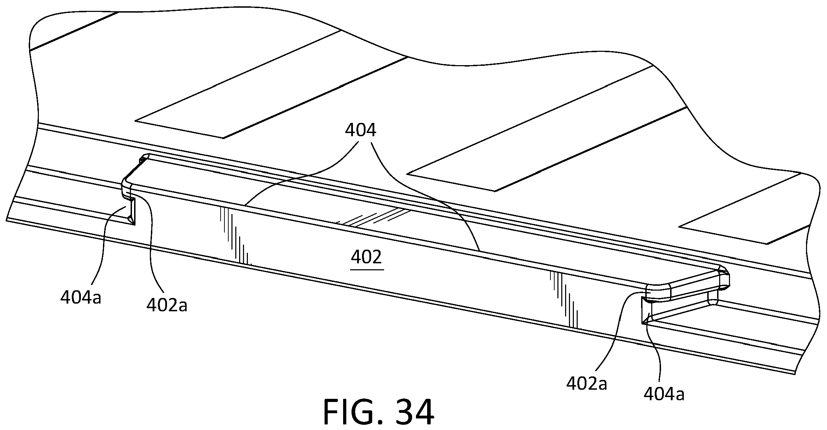

As well, the pocket 404 may comprise a wedge-shaped recess that matches the configuration of the fist 402 so that the pocket 404 is able to slidingly receive the fist 402. To aid in retention of the fist 402, the pocket 404 may define a channel 404a at either side of the pocket 404. Each of the channels 404a may be configured and arranged to receive a respective flange 402a of the fist 402, as shown in Figure 34.

Thus, and with reference again to the example of Figure 28 as well, the configuration comprising the flange 402a and channel 404a may prevent the fist 402 from being lifted up out of the pocket 404, and so prevent the respective panels that include the flange 402a and the channel 404a from being separated by a force applied, for example, in the direction shown by the arrows 'B' in Figure 28. As well, the configuration of a fist 402 and pocket 404 may prevent a pair of engaged panels from being slid apart from each other in a lateral, or shear, direction, as discussed above in connection with Figure 28.

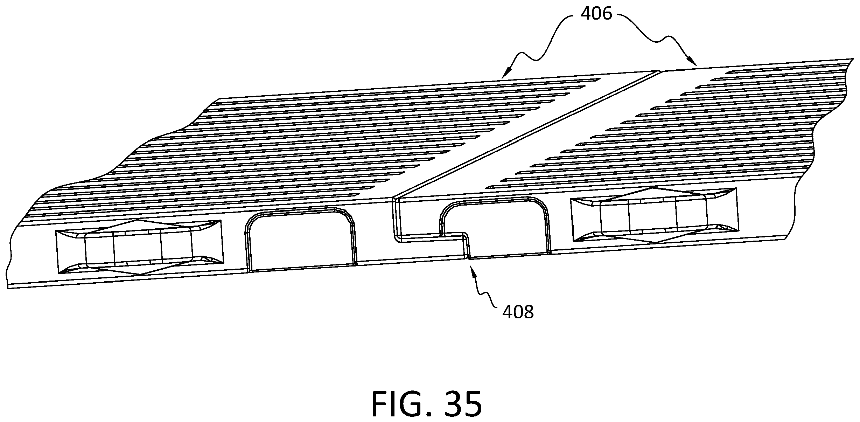

Figure 35 discloses an example arrangement in which a pair 406 of panels are fully engaged with each other, that is, the fists (not shown) of one panel are fully received in respective pockets (not shown) of the other panel, as in the manner indicated in Figure 34. The pair 406 of panels may be engaged in this way by pushing the fists of one panel down into the corresponding pockets of the other panel. In an embodiment, the pair 406 of panels may form a lap joint 408 when they are fully engaged with each other.

As disclosed herein, one or more embodiments may comprise a dovetail configuration cooperatively defined and implemented by a pair of panels, or other structures. A wedge aspect, implemented as part of a dovetail configuration, may provide various useful functionalities. For example, the wedge configuration may prevent two engaged panels, which collectively define a plane, from moving away from each other in a shear, or lateral, direction while remaining in that plane. As another example, the wedge configuration may reduce, or eliminate, stress concentrations that might occur at corners of fists and pockets having a rectangular shape.

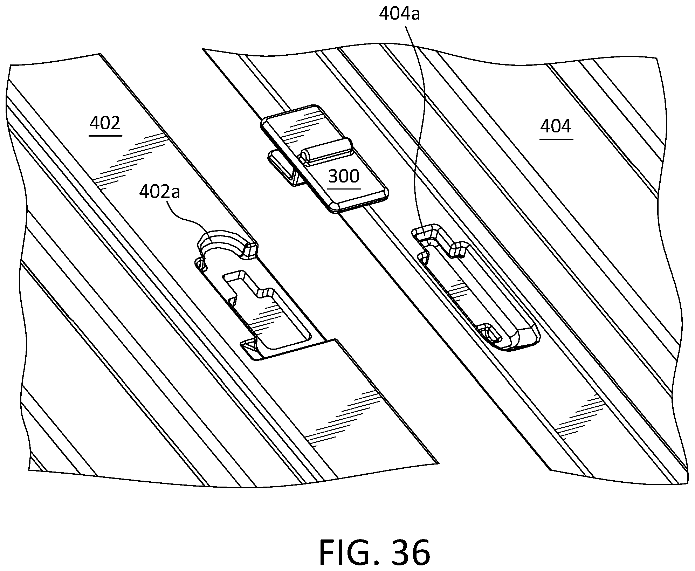

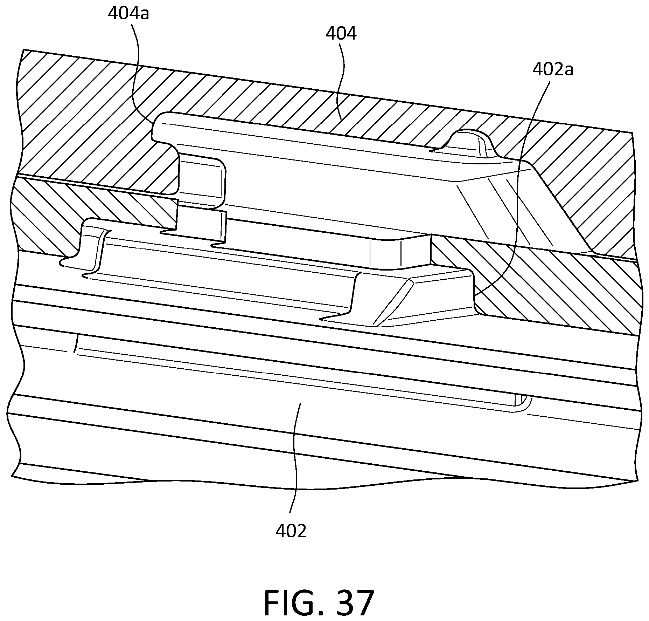

With reference finally to Figures 36 and 37, an embodiment may comprise panels 402 and 404 that comprise respective recesses 402a and 404a configured to be releasably engaged by a connector 300 so as to retain the panels 402 and 404 in the manner shown in the example of Figure 35. Further details concerning the configuration, arrangement, and operation of recesses and a connector, such as the recesses 402a and 404a, and the connector 300, for example, are disclosed in the *'433 Application.*

### C. Aspects of example production processes

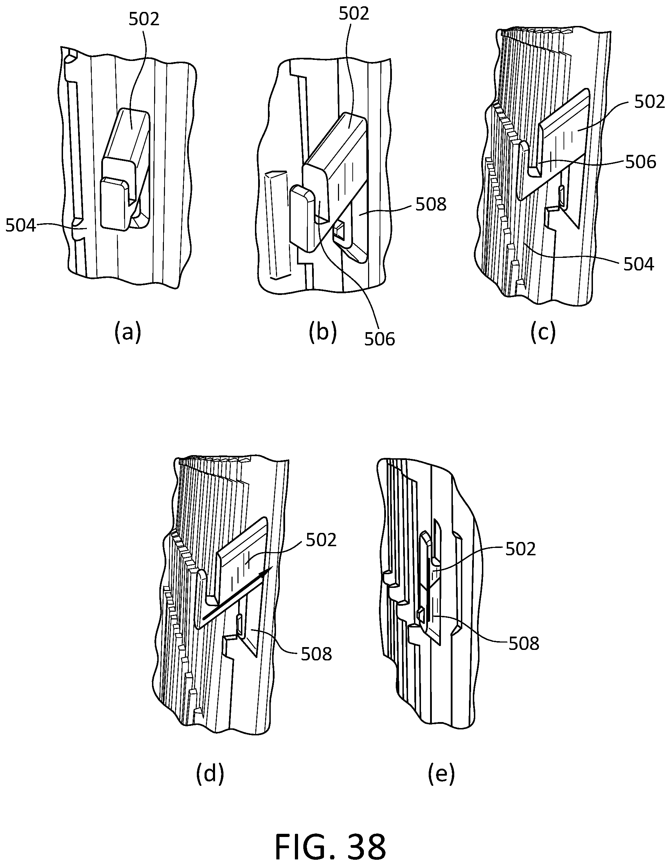

Turning now to Figures 38, 39, and 40, details are provided concerning aspects of example production processes according to one or more embodiments. Some example embodiments involve the use of a blow-molding process which, in brief, creates a parison of melted plastic within a mold, such that when the mold closes, the plastic of the parison conforms to the interior of the mold to create the molded part. When the plastic has cooled, the part can be removed from the mold.

As shown in Figure 38, various mechanisms and devices may be placed in a mold to impart features of desired size, configuration, and orientation, to the finished molded part. Such features may include, but are not limited to, recesses, protrusions, pockets, and fists.

In Figure 38 (part 1.), a moving core 502 is in an extended position within an open mold 504. The moving core 502 may comprise various structural features, such as a slot 506, that may create a corresponding feature in the molded part. The moving core 502 may cooperate with one or more static elements 508, of various different configurations, of the mold 504 to fully define the final feature of the molded part. The static element 508 may be integral with the mold 504 itself, or may be removable from the mold 504.

Figure 38 (part 2.) shows that as the mold 504 is closing, and the parison (not shown in Figure 38) begins to contact the moving core 502, the moving core 502 begins to retract partway into the wall of the mold 504, as indicated by the arrow. After full retraction, a portion of the moving core 502 may remain within the interior envelope of the mold 504, so as to cooperate with the static element 508 to completely define the feature to be imparted in the molded part. At this juncture, the mold 504 and moving core 502 are in a configuration that will define the feature of the molded part when the parison has fully formed around the moving core 502 and the static feature 508.

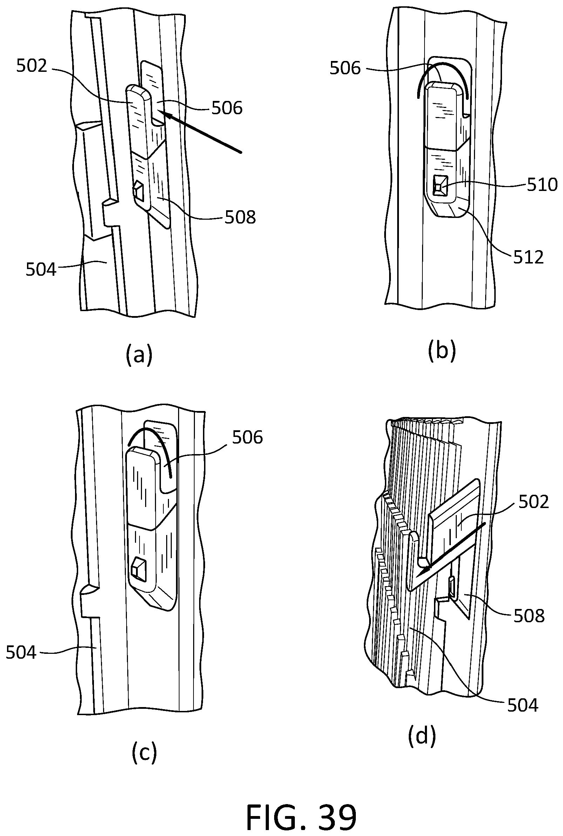

Turning next to the example of Figure 39 (part 3.), the moving core 502 and the static feature 508 are shown in the dispositions that they will remain in during molding, and which will result in creation of the feature of the molded part while the mold 504 is closed. In particular, the respective upper surfaces of the moving core 502 and the static feature 508 are flush with each other so that the corresponding portion of the feature of the molded part will have a smooth surface. In addition to the portion of the feature of the molded part defined by the undercut 506, yet other portions of the feature of the molded part may be defined by elements such as, but not limited to, a button 510, and sloped rear surface 512, of the static feature 508.

After the molded part has been created, the mold 504 may be opened. As shown in Figure 39 (part 4.), the moving core 502 may then move, as shown by the arrow, out of the feature that has been created in the molded part, and into an extended position, while the static feature 508 remains in its original position.

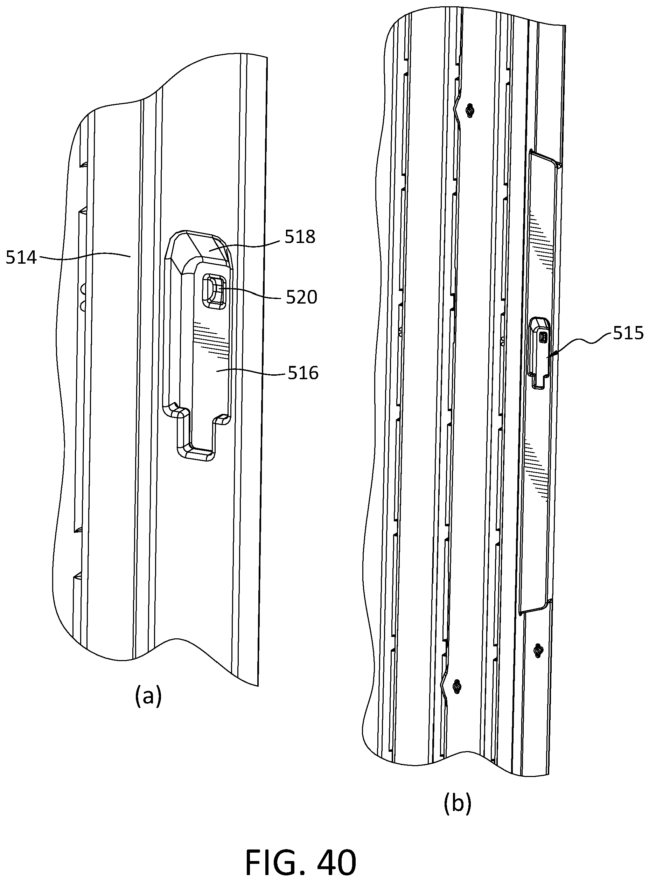

As shown in Figure 40, the various features of the moving core 502 and static feature 508 are reflected in the feature 515 of the molded part 514. For example, the moving core 502 and the static feature 508 have together defined a recess 516 with a sloped wall 518, and an indentation 520 formed by the button 510.

It is noted that the various elements disclosed in Figures 38-40 are presented only by way of illustration. Various embodiments may be defined with different static features, moving cores, and molded part features. Thus, the examples of Figures 38-40 are not intended to limit the scope of this disclosure, or the scope of any claims, in any way.

### D. Further example embodiments - group 1.

Embodiment 1. An apparatus, comprising: a first structure that defines one or more first complementary structures along an edge of the first structure; and a second structure that defines one or more second complementary structures along an edge of the second structure, and the first structure and second structure are configured to be removably connected by engagement of the first complementary structures with respective ones of the second complementary structures.

Embodiment 2. The apparatus as recited in any preceding embodiment, wherein one or both of the first structure and the second structure comprise a respective blow-molded structure with a hollow interior.

Embodiment 3. The apparatus as recited in any preceding embodiment, wherein the first complementary structures and the second complementary structures together define a dovetail configuration along the edges of the first structure and the second structure when the first structure and the second structure are connected to each other.

Embodiment 4. The apparatus as recited in any preceding embodiment, wherein one or both of the first structure and the second structure comprise a respective panel.

Embodiment 5. The apparatus as recited in any preceding embodiment, wherein the first complementary structures and the second complementary structures are integral with the respective structures that include them.

Embodiment 6. The apparatus as recited in any preceding embodiment, wherein the first structure comprises one or more second complementary structures along a second edge of the first structure.

Embodiment 7. The apparatus as recited in any preceding embodiment, wherein the second structure comprises one or more first complementary structures along a second edge of the second structure.

Embodiment 8. The apparatus as recited in any preceding embodiment, wherein the first complementary structures and the second complementary structures are configured to prevent lifting one of the first and second structures off of the other of the first and second structures when the first and second structures are connected together.

Embodiment 9. The apparatus as recited in any preceding embodiment, wherein the first structure and the second structure form a lap joint when they are connected together.

Embodiment 10. The apparatus as recited in any preceding embodiment, wherein the first complementary structures comprise respective pockets, and the second complementary structures comprise respective fists.

Embodiment 11. The apparatus as recited in any preceding embodiment, further comprising a connector configured to engage both the first structure and the second structure and to releasably retain the first structure and the second structure together.

Embodiment 12. The apparatus as recited in embodiment 11, wherein a portion of the connector is in tension when the connector retains the first structure and the second structure together.

Embodiment 13. The apparatus as recited in any of embodiments 11-12, wherein the connector compresses the first structure and the second structure together when the connector is engaged with the first structure and the second structure.

Embodiment 14. The apparatus as recited in any of embodiments 11-13, wherein the connector is elastically deformed when the connector retains the first structure and the second structure together.

Embodiment 15. The apparatus as recited in any of embodiments 11-14, wherein the connector comprises a single-piece structure.

Embodiment 16. The apparatus as recited in any of embodiments 11-15, wherein when connected together, the first structure and the second structure are connected edge-to-edge.

Embodiment 17. The apparatus as recited in any of embodiments 11-16, wherein the connector is configured to be at least partly received in, and engage, a receptacle cooperatively defined by the first structure and the second structure when they are connected together.

Embodiment 18. The apparatus as recited in embodiment 17, wherein the receptacle is defined by respective recesses of the first structure and the second structure.

Embodiment 19. The apparatus as recited in embodiment 18, wherein the recesses are partly aligned with each other when the first structure and the second structure are connected together.

### E. Further example embodiments - group 2.

Embodiment 1. A method for creating a feature in a molded part, comprising: inflating a parison of melted plastic; closing a mold about the parison, wherein the mold comprises a static feature arranged for contact with the parison when the mold is closed; adjusting a position of a moving core, located in the mold, from an extended position to a retracted position; with the retracted moving core and the static feature, imparting a feature to the plastic; and moving the moving core from the retracted position to the extended position, and removing the molded part from the mold.

Embodiment 2. The method as recited in any preceding embodiment, wherein the moving core is in the extended position while the parison is being created.

Embodiment 3. The method as recited in any preceding embodiment, wherein the moving core begins moving into the retracted position as the mold is closing and the parison begins to contact the moving core.

Embodiment 4. The method as recited in any preceding embodiment, wherein after the mold is closed, the plastic encloses the moving core and the static feature.

Embodiment 5. The method as recited in any preceding embodiment, wherein the moving core moves to the extended position as one or more ejectors extend to eject the molded part from the mold.

Embodiment 6. The method as recited in any preceding embodiment, wherein the moving core moves out of the feature as the mold is opened after creation of the molded part.

Although this disclosure has been described in terms of certain embodiments, other embodiments apparent to those of ordinary skill in the art are also within the scope of this disclosure. Accordingly, the scope of the disclosure is intended to be defined only by the claims which follow.

### List of reference numerals

### FIGURES 1-23

100 Connector
101 Body
102 Upper Surface
104 Protrusion
106 Arm
106a Lower Portion
106b Upper Portion
108 Lower Surface
110 Web
200a Structures
200b Structures
202a Ledge
202b Shelf
204 Push Pin
204a Opening
204b Recesses
206b Recess
207 Receptacle
208a Posts/Protrusions
208b Undercut
210a Recessed Portion
210b Protruding Elements
212a Perimeter of Recessed Portion
212b One or More Undercuts
214a Depression
300 Apparatus
302 Slot
400 Connector
402 Push Pin
402a Necked Portion
404 Receiver/Receptacle
406 Tether

### FIGURES 24-40

102 Panel
102a Fists
102b Pocket
104 Panel
104a Fists
202 Panel
202a Fists
202b Element
204 Panel
204a Pocket
204b Element
300 Connector
400 Panel
402 Fists
402a Flange
402b Undercut
404 Pocket
404a Channel
406 Pair of Panels
408 Lap Joint
502 Moving Core
504 Mold
506 Slot/Undercut
508 Static Element
510 Button
512 Sloped Rear Surface
514 Molded Part
515 Feature
516 Recess
518 Sloped Wall
520 Indentation

## Claims

1. An apparatus, comprising:
a first structure;
a second structure; and
a connector configured to releasably connect the first structure and the second structure together, and the connector comprises:
a body;
an arm that is integral with the body and is configured to be removably received in a receptacle cooperatively defined by the first structure and the second structure; and
a web connecting the arm to the body.

2. The apparatus as recited in claim 1, wherein the arm includes a first portion connected to a lower surface of the body, and a second portion disposed at an angle greater than 90 degrees with respect to the first portion.

3. The apparatus as recited in claim 1, wherein the connector is in a form of a single piece structure.

4. The apparatus as recited in claim 1, wherein the connector comprises a protrusion extending upward from an upper surface of the body.

5. The apparatus as recited in claim 1, wherein the arm of the connector extends downward from a lower surface of the body.

6. The apparatus as recited in claim 1, wherein the connector comprises a single solid piece of plastic.

7. The apparatus as recited in claim 1, wherein the arm of the connector is configured to releasably engage an undercut of one of the first structure and the second structure when the connector is fully engaged with the receptacle.

8. The apparatus as recited in claim 1, wherein one or both of the first structure and the second structure comprises a respective blow-molded structure.

9. The apparatus as recited in claim 1, wherein the connector is configured to reside flush within the receptacle.

10. The apparatus as recited in claim 1, wherein a majority of an upper surface of the connector is flush with adjacent respective surfaces of the first structure and the second structure when the connector is fully received in the receptacle.

11. The apparatus as recited in claim 1, wherein the first structure and the second structure define a protrusion and a recess, respectively, configured and arranged to releasably engage each other.

12. The apparatus as recited in claim 11, wherein the protrusion comprises a fist, and the recess comprises a pocket.

13. The apparatus as recited in claim 11, wherein the protrusion and the recess collectively define a dovetail configuration.

14. The apparatus as recited in claim 11, wherein the first structure comprises multiple instances of the protrusion disposed along one or more edges of the first structure.

15. The apparatus as recited in claim 11, wherein the second structure comprises multiple instances of the recess disposed along one or more edges of the second structure.

16. The apparatus as recited in claim 11, wherein the protrusion and the recess comprise respective complementary wedge-shaped configurations.

17. The apparatus as recited in claim 11, further comprising a recess in communication with the receptacle and configured to accommodate a tool for removal of the connector.

18. The apparatus as recited in claim 11, wherein the apparatus comprises a portion of a shed.

19. The apparatus as recited in claim 11, wherein the first structure comprises multiple recesses disposed on a first edge of the first structure, and also comprises multiple protrusions disposed on an opposite second edge of the first structure.

20. The apparatus as recited in claim 11, wherein the first structure and the second structure each comprise a respective blow-molded shed panel.

21. A method for creating a feature in a molded part, comprising:
inflating a parison of melted plastic;
closing a mold about the parison, wherein the mold comprises a static feature arranged for contact with the parison when the mold is closed;
adjusting a position of a moving core, located in the mold, from an extended position to a retracted position;
with the retracted moving core and the static feature, imparting a feature to the plastic; and
moving the moving core from the retracted position to the extended position, and removing the molded part from the mold.

22. The method as recited in claim 21, wherein the moving core is in the extended position while the parison is being created.

23. The method as recited in claim 21, wherein the moving core begins moving into the retracted position as the mold is closing and the parison begins to contact the moving core.

24. The method as recited in claim 21, wherein after the mold is closed, the plastic encloses the moving core and the static feature.

25. The method as recited in claim 21, wherein the moving core moves to the extended position as one or more ejectors extend to eject the molded part from the mold.

26. The method as recited in claim 21, wherein the moving core moves out of the feature as the mold is opened after creation of the molded part.
